# FASCICULE DE BREVET EUROPEEN

(11) **EP 0 726 626 B1**
(45) Date de publication et mention de la délivrance du brevet: **27.09.2000**
(21) Numéro de dépôt: 96400274.5
(22) Date de dépôt: 09.02.1996
(51) Int. Cl.: H01S 3/036

(54) **Dispositif d'alimentation d'un appareil laser à mélange gazeux et appareil laser muni d'un tel dispositif**
Vorrichtung zur Versorgung eines Lasergerätes mit einer Gasmischung und ein mit einer solchen Vorrichtung versehenes Lasergerät
Supply device for a gas mixture laser apparatus and laser apparatus provided with such a device

(30) Priorité: 10.02.1995 FR 9501546
(43) Date de publication de la demande: 14.08.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Marie, Bruno, F-78310 Elancourt (FR); Guerin, Daniel, F-77500 Chelles (FR); Larquet, Christian, F-78280 Guyancourt (FR); Willemot, Antoine, F-92330 Sceaux (FR)
(74) Mandataire: Mercey, Fiona Susan

(56) Documents cités:
- EP-A- 0 575 206
- PATENT ABSTRACTS OF JAPAN vol. 015 no. 261 (E-1085) ,3 Juillet 1991 & JP-A-03 084980 (S.SETSUO ET AL.) 10 Avril 1991,

## Description

La présente invention est relative à un dispositif d'alimentation d'un appareil laser à mélange gazeux, du type comprenant une première conduite servant à amener un premier gaz à l'appareil, une deuxième conduite servant à amener à l'appareil un deuxième gaz destiné à se mélanger au premier gaz, une troisième conduite servant à recycler le mélange des deux gaz issu de l'appareil, et un perméateur dont l'entrée est reliée à la troisième conduite, dont la sortie de perméat est reliée à la deuxième conduite, et dont la sortie de rejet est reliée à la première conduite.

Les pressions dont il est question ci-dessous sont des pressions absolues.

Le FR-A-2 692 729 (correspondant à EP 0 575 206 A) au nom de la Demanderesse décrit un dispositif d'alimentation en azote et en CO2 du type précité. Ce dispositif est destiné à un appareil laser de puissance pour la découpe de matériaux, comprenant un générateur de flux d'azote excité du type à décharge électrique froide fonctionnant à une pression supérieure à 0,3 x 10⁵ Pa, et couplé à un guide d'onde à miroirs, opposés suivant une direction principale du guide d'onde.

Par "décharge électrique froide", on entend la formation d'espèces excitées dans un mélange gazeux, la température des espèces électriquement neutres du mélange gazeux n'excédant pas 250°C, plus généralement 150°C. Ce type de décharge est également appelée, selon les auteurs, par exemple "décharge couronne", "Atmospheric Pressure Glow Discharge", "Barrier Discharge" ou encore "Silent Discharge".

La pression de fonctionnement optimale de cet appareil laser, du point de la puissance et du rendement, est d'environ 400 à 500 millibars.

L'invention a pour but d'assurer l'alimentation de l'appareil, le recyclage du mélange gazeux et sa séparation par perméation de façon particulièrement économique.

A cet effet, l'invention a pour objet un dispositif d'alimentation du type précité, caractérisé en ce qu'une turbine de détente est montée dans la première conduite, en ce qu'un compresseur d'aspiration est monté dans la troisième conduite, et en ce que l'énergie mécanique développée par la turbine est utilisée pour entraîner le compresseur d'aspiration.

Le dispositif d'alimentation suivant l'invention peut comporter une ou plusieurs des caractéristiques suivantes :
- la roue de la turbine et celle du compresseur d'aspiration sont calées sur un même arbre;
- un second compresseur, entraîné par une source d'énergie extérieure, est monté dans la troisième conduite en aval du compresseur d'aspiration;
- la sortie de rejet du perméateur est reliée à la première conduite via un second perméateur dont l'entrée est reliée à la sortie de rejet du premier perméateur, dont la sortie de rejet est reliée à la première conduite, et dont la sortie de perméat est reliée au refoulement du compresseur d'aspiration;
- le dispositif comprend un échangeur de chaleur qui met en relation d'échange thermique la première conduite, en aval (respectivement en amont) de la turbine, et la troisième conduite, en amont (respectivement en aval) du compresseur d'aspiration;
- le dispositif comprend un échangeur de chaleur qui met en relation d'échange thermique la première conduite, en amont de la turbine, et la troisième conduite, en amont du compresseur d'aspiration.
- le dispositif comprend des moyens de refroidissement du ou des perméateurs;
- la turbine et le compresseur d'aspiration sont du type à paliers gaz;
- le premier gaz est au moins essentiellement de l'azote et le deuxième gaz contient de l'anhydride carbonique.

L'invention a également pour objet un appareil laser à mélange gazeux équipé d'un dispositif d'alimentation tel que défini ci-dessus.

Des exemples de réalisation de l'invention vont maintenant être décrits en regard des dessins annexés, sur lesquels :
- la Figure 1 est une vue schématique illustrant l'agencement de principe d'un appareil ;
- la Figure 2 est une vue schématique en coupe transversale d'un appareil ;
- la Figure 3 représente schématiquement un dispositif suivant l'invention, destiné à l'alimentation en gaz de l'appareil de la Figure 2; et
- les Figures 4 et 5 sont des vues analogues de deux variantes, respectivement.

Dans la description qui va suivre et sur les dessins, les éléments identiques ou analogues portent les mêmes chiffres de référence.

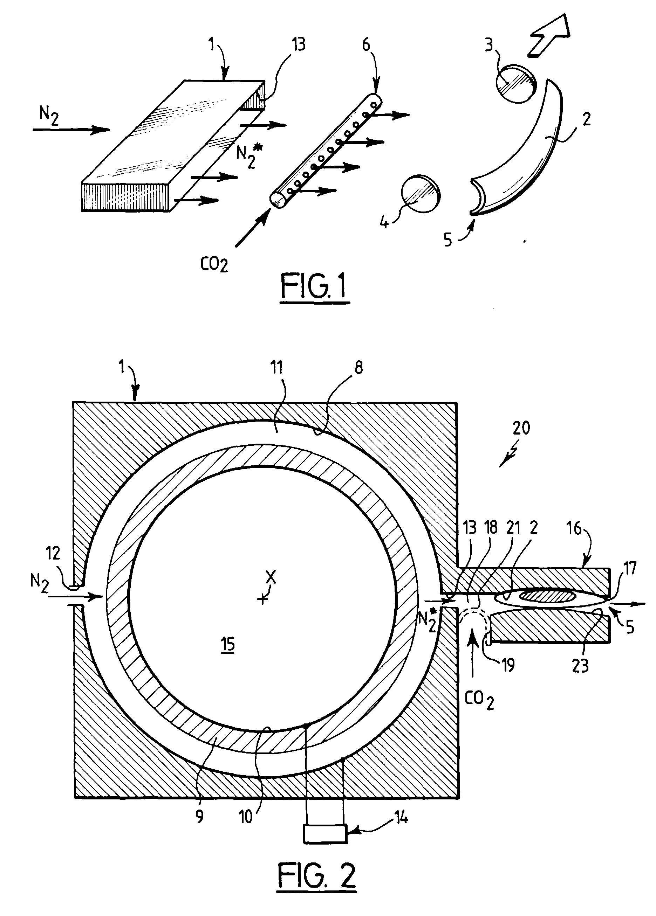

L'appareil représenté sur la Figure 1 comprend un générateur de décharge 1 délivrant en sortie un flux de gaz comprenant des molécules d'azote excitées, fourni à une cavité résonante constituée par un guide d'onde, par exemple un tronçon de "galerie chuchotante" 2 en forme de gouttière arquée ayant un rayon de courbure principal supérieur à 1 m et pourvu à ses extrémités opposées d'un miroir réfléchissant 3 et d'un miroir ou fenêtre 4 de transmission du faisceau laser.

La structure et les propriétés d'une galerie chuchotante (en anglais "whispering gallery") comme guide d'onde sont décrites dans le document US-A-4 194 808, Marhic et al. L'utilisation comme laser d'une telle galerie chuchotante est décrite dans l'Article "Whispering gallery CO₂-laser" de Marhic et al, dans IEEE Journal of Quantum Electronics, vol. QE-15, N° 6, de juin 1979. Les miroirs 3 et 4, aux extrémités de la galerie chuchotante 2, sont constitués d'au moins une lame en diamant C-II-A revêtue ou non revêtue, comme décrit par exemple dans le FR-A-2 688 098, au nom de la Demanderesse.

En variante, d'autres types de guides d'onde peuvent être utilisés en remplacement de la galerie chuchotante 2.

Un flux de CO₂ est mélangé au flux contenant l'azote excité par un dispositif d'injection 6 interposé entre la cavité résonante 5 du guide d'onde 2 et la sortie du générateur 1. Le générateur 1 est agencé pour produire, via un passage de sortie allongé 13, un flux de gaz homogène transversalement au guide d'onde 2, lequel présente une forme de gouttière ayant une direction principale sensiblement parallèle au passage de sortie 13.

Dans le mode de réalisation représenté sur la Figure 2, le générateur 1 est tel que décrit dans le FR-A-2 692 730 au nom de la Demanderesse, et comprend essentiellement, dans un bloc métallique, une électrode périphérique tubulaire 8 d'axe X entourant concentriquement un tube diélectrique 9 coaxial sur la face intérieure duquel est appliquée une électrode intérieure 10 et ménageant, avec l'électrode périphérique 8, un passage tubulaire de gaz 11 coaxial au tube diélectrique 9 et débouchant vers l'extérieur du bloc par une entrée 12 et une sortie 13 en forme de fentes, parallèles à l'axe X du passage 11, diamétralement opposées et ayant une hauteur n'excédant pas l'épaisseur radiale du passage tubulaire 11. Les électrodes 8 et 10 sont reliées à un générateur haute tension et haute fréquence 14. L'électrode intérieure 10 délimite un volume interne dans lequel circule un fluide de refroidissement 15, par exemple de l'eau ou un Fréon.

Dans le mode de réalisation de la Figure 2, l'appareil est complété par un bloc 16 accolé au bloc générateur 1, définissant un logement longitudinal ayant une hauteur d'environ 1 mm et dans lequel est disposée la galerie chuchotante 2 avec le fond de la gouttière sensiblement parallèle au plan diamétral des entrée et sortie 12 et 13, avec un passage latéral de sortie de gaz 17 et un passage d'entrée de gaz 18 parallélépipédique prolongeant la sortie 13 du bloc 1 et dans lequel débouche transversalement un passage parallélépipédique 19 permettant l'introduction de CO₂ dans l'entrée 18, via par exemple une grille d'homogénéisation 21 pour mélanger le CO₂ avec le flux gazeux contenant l'azote excité, ce dernier transférant son énergie au CO₂ avant introduction dans la cavité laser en excitant exclusivement le niveau supérieur de la transition laser.

Le faisceau laser, représenté schématiquement sur la Figure 2, est elliptique et a une polarisation linéaire. Le gaz entrant par un côté riche en énergie vibrationnelle et sortant vidé de cette énergie, le faisceau est dissymétrique suivant la direction du flux gazeux transversalement à la galerie 2 (axe Z). Pour garantir qu'une partie substantielle des espèces excitées passe dans la zone contenant les photons, on peut prévoir la paroi inférieure 23 du logement de la galerie 2 avec des indentations orientées favorisant ainsi la formation d'un écoulement extrêmement turbulent dans le logement.

D'autres détails et certaines variantes sont décrits dans le FR-A-2 692 729 précité.

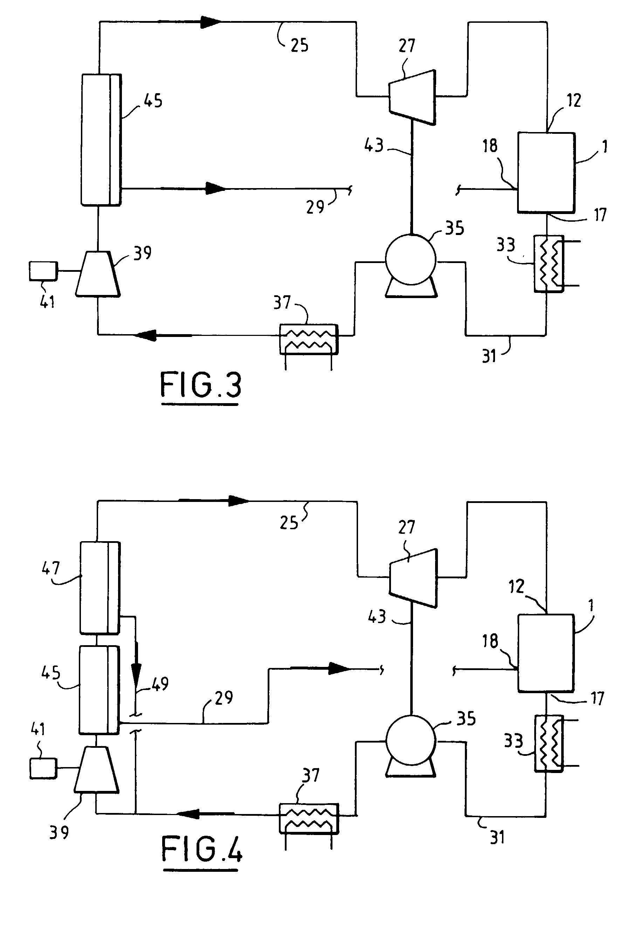

On décrira maintenant, en regard de la Figure 3, le dispositif d'alimentation du générateur 1 en azote et en CO₂.

Ce dispositif comprend :
- Une première conduite 25 d'alimentation en azote, reliée à l'entrée 12 du générateur. Une turbine de détente 27 est montée dans cette conduite.
- Une deuxième conduite 29 d'alimentation en CO₂, reliée à l'entrée 18.
- Une troisième conduite 31 de recyclage du mélange azote-CO₂, reliée à la sortie 17. Dans cette conduite sont montés successivement un réfrigérant à eau 33, un compresseur d'aspiration 35, un réfrigérant à eau 37, et un compresseur 39 entraîné par un moteur électrique 41. La roue du compresseur 35 et celle de la turbine 27 sont calées sur un même arbre 43.
- Un perméateur 45, dont l'entrée est reliée au refoulement du compresseur 39, dont la sortie de rejet est reliée à la conduite 25, et dont la sortie de perméat est reliée à la conduite 29.

On décrira maintenant le fonctionnement du dispositif de la Figure 3, avec un exemple numérique.

Le débit total d'un mélange gazeux 90% N₂, 10% CO₂, circulant dans la conduite 31, est 240 Nm³/h. Le perméat circulant dans la conduite 29 représente 100 Nm³/h et est constitué de la quasi-totalité du CO₂, le reste étant de l'azote. Le rejet est constitué d'azote à peu près pur, avec un débit de 140 Nm³/h.

Pour faire fonctionner le perméateur, le mélange est comprimé à 12 bars en 39, de sorte que cette pression est celle de l'azote rejeté en 25. Cet azote est détendu à 0,7 bar en 27. Le perméat est fourni au générateur 1 sous 1 bar par la conduite 29.

Le compresseur 35 aspire le mélange sous 0,5 bar, qui constitue ainsi la pression régnant dans le générateur 1, et le refoule sous 1 bar.

Grâce à l'agencement ainsi décrit, on récupère, par une détente isentropique, l'énergie disponible sous forme de pression au rejet du perméateur 45, et on l'utilise pour assurer la dépression dans l'appareil laser. De plus, la détente isentropique refroidit fortement l'azote, ce qui a pour résultat une amélioration substantielle, de l'ordre de 10 à 15%, du rendement de l'appareil laser.

Pour la turbine 27 et le compresseur 35, on peut avantageusement utiliser des dispositifs du type à paliers gaz, à très haute vitesse de rotation, qui permettent de réduire l'encombrement.

Dans certaines applications, la détente du débit d'azote en 27 peut être insuffisante pour assurer la compression en 35 du débit total de mélange. Il faut alors relever la pression de refoulement du compresseur 39, ce qui permet de diminuer le nombre de modules de perméation mais conduit à une augmentation de la dépense d'énergie.

Pour réduire l'appoint d'énergie nécessaire en 35, on peut également chercher à réduire le rapport débit d'azote rejeté/débit total à comprimer en 35. En effet, pour un débit d'azote rejeté donné, ceci assure une diminution dudit débit total.

Pour cela, une première méthode consiste à réduire la température du perméateur 45. Ceci provoque en effet une augmentation de la sélectivité du perméateur, et donc, pour une pureté donnée de l'azote rejeté, une augmentation du rapport débit d'azote/débit total. En revanche, le nombre de modules de perméation doit être augmenté, car la perméabilité des gaz diminue avec l'abaissement de la température.

Une autre solution est illustrée à la Figure 4 : un second perméateur 47 est monté en aval du perméateur 45, avec son entrée reliée à la sortie de rejet de ce dernier, sa sortie de rejet reliée à la conduite 25, et sa sortie de perméat reliée à l'aspiration du compresseur 39 via une conduite 49.

Dans ce cas, le perméateur 45 ne récupère qu'une partie du CO₂, qui est envoyée dans la conduite 29, tandis que le perméateur 47 assure l'épuration de l'azote. De cette manière, la quantité d'azote véhiculé par la conduite 29 est fortement réduite, et le débit comprimé en 35 est réduit d'autant.

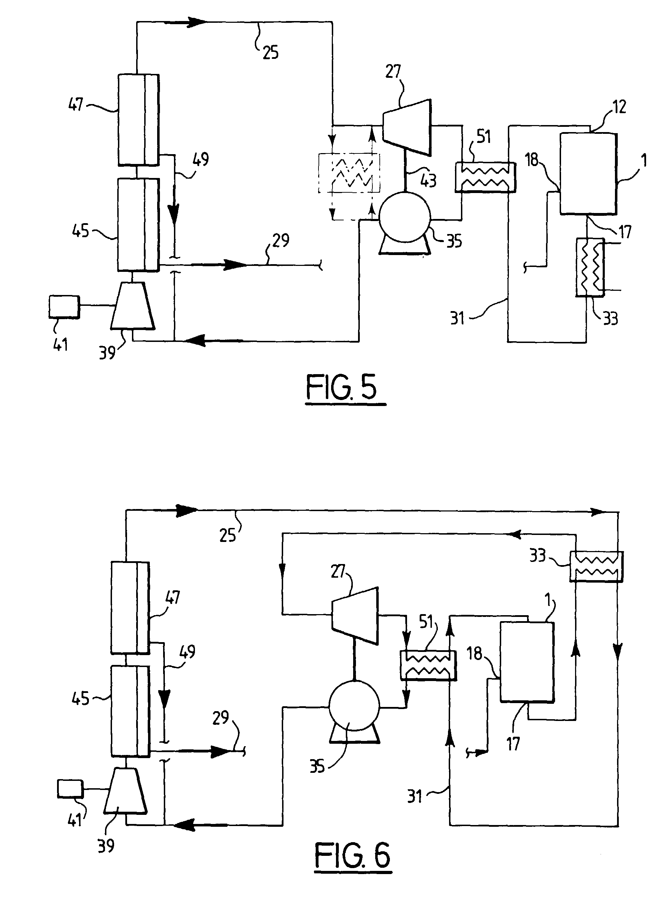

La Figure 5 représente une variante du schéma de la Figure 4 dans laquelle l'échangeur de chaleur 37 est supprimé, tandis qu'un échangeur de chaleur 51 met en relation d'échange thermique l'azote froid sortant de la turbine 27 et le mélange aspiré par le compresseur 35.

Ce dernier comprime donc un mélange de gaz refroidi, ce qui nécessite moins d'énergie.

En variante, comme représenté en traits mixtes, l'échangeur 51 peut mettre en relation d'échange thermique l'azote arrivant à la turbine 27 et le mélange refoulé par le compresseur 35. L'énergie fournie par la détente est alors augmentée par augmentation de la température du gaz à l'entrée de la turbine.

Dans l'exemple de la Figure 6, l'échangeur 33 qui sert à réfrigérer le mélange issu du générateur 1 est réfrigéré par l'azote issu du perméateur 47 et allant vers la turbine 27. Ainsi, de nouveau, on réchauffe le gaz d'alimentation de cette turbine, ce qui augmente l'énergie fournie par la détente.

Bien entendu, comme décrit dans le FR-A- 2 692 729 précité, une faible quantité d'hydrogène, typiquement de l'ordre de 1%, peut-être ajoutée au mélange. Cet hydrogène permée alors avec le CO₂. De même, l'azote peut contenir un faible pourcentage d'oxygène.

## Revendications

1. Dispositif d'alimentation d'un appareil laser (1) à mélange gazeux, du type comprenant une première conduite (25) servant à amener un premier gaz à l'appareil, une deuxième conduite (29) servant à amener à l'appareil un deuxième gaz destiné à se mélanger au premier gaz, une troisième conduite (31) servant à recycler le mélange des deux gaz issu de l'appareil, et un perméateur (45) dont l'entrée est reliée à la troisième conduite, dont la sortie de perméat est reliée à la deuxième conduite, et dont la sortie de rejet est reliée à la première conduite, caractérisé en ce qu'une turbine de détente (27) est montée dans la première conduite (25), en ce qu'un compresseur d'aspiration (35) est monté dans la troisième conduite (31), et en ce que l'énergie mécanique développée par la turbine est utilisée pour entraîner le compresseur d'aspiration.

2. Dispositif suivant la revendication 1, caractérisé en ce que la roue de la turbine (27) et celle du compresseur d'aspiration (35) sont calées sur un même arbre (43).

3. Dispositif suivant la revendication 1 ou 2, caractérisé en ce qu'un second compresseur (39), entraîné par une source d'énergie extérieure (41), est monté dans la troisième conduite (31) en aval du compresseur d'aspiration (35).

4. Dispositif suivant l'une quelconque des revendications 1 à 3, caractérisé en ce que la sortie de rejet du perméateur (45) est reliée à la première conduite (25) via un second perméateur (47) dont l'entrée est reliée à la sortie de rejet du premier perméateur, dont la sortie de rejet est reliée à la première conduite (25), et dont la sortie de perméat est reliée au refoulement du compresseur d'aspiration (35).

5. Dispositif suivant l'une quelconque des revendications 1 à 4, caractérisé en ce qu'il comprend un échangeur de chaleur (51) qui met en relation d'échange thermique la première conduite (25), en aval (respectivement en amont) de la turbine (27), et la troisième conduite (31), en amont (respectivement en aval) du compresseur d'aspiration (35).

6. Dispositif suivant l'une quelconque des revendications 1 à 4, caractérisé en ce qu'il comprend un échangeur de chaleur (33) qui met en relation d'échange thermique la première conduite (25), en amont de la turbine (27), et la troisième conduite (31), en amont du compresseur d'aspiration (35).

7. Dispositif suivant l'une quelconque des revendications 1 à 6, caractérisé en ce qu'il comprend des moyens de refroidissement du ou des perméateurs (45; 45, 47).

8. Dispositif suivant l'une quelconque des revendications 1 à 7, caractérisé en ce que la turbine (27) et le compresseur d'aspiration (35) sont du type à paliers gaz.

9. Dispositif suivant l'une quelconque des revendications 1 à 8, caractérisé en ce que le premier gaz est au moins essentiellement de l'azote et en ce que le deuxième gaz contient de l'anhydride carbonique.

10. Appareil laser à mélange gazeux (1) équipé d'un dispositif d'alimentation suivant l'une quelconque des revendications 1 à 9.

## Patentansprüche

1. Beschickungsvorrichtung eines gasgemischhaltigen Laserapparates (1), mit einer ersten Leitung (25), die zur Beschickung des Apparates mit einem ersten Gas dient, einer zweiten Leitung (29), die zur Beschickung des Apparates mit einem mit dem ersten Gas zu vermischenden zweiten Gas dient, einer dritten Leitung (31), die zur Rückführung des aus dem Apparat stammenden Gemischs der zwei Gase dient, sowie einer Permeationsvorrichtung (45), deren Eingang an die dritte Leitung angeschlossen ist, deren Permeatausgang an die zweite Leitung angeschlossen ist und deren Abzugsöffnung an die erste Leitung angeschlossen ist, dadurch gekennzeichnet, daß in die erste Leitung (25) eine Expansionsturbine (27) eingebaut ist, daß in die dritte Leitung (31) ein Ansaugverdichter (35) eingebaut ist und daß die von der Turbine erzeugte mechanische Energie zum Antrieb des Ansaugverdichters genutzt wird.

2. Vorrichtung nach Anspruch 1, dadurch gekennzeichnet, daß das Rad der Turbine (27) und das des Ansaugverdichters (35) auf der gleichen Welle (43) befestigt sind.

3. Vorrichtung nach Anspruch 1 oder 2, dadurch gekennzeichnet, daß ein zweiter, von einer externen Energiequelle (41) angetriebener Verdichter (39) in die dritte Leitung (31) an einer dem Ansaugverdichter (35) nachgeschalteten Stelle eingebaut ist.

4. Vorrichtung nach einem der Ansprüche 1 bis 3, dadurch gekennzeichnet, daß die Abzugsöffnung der Permeationsvorrichtung (45) an die erste Leitung (25) über eine zweite Permeationsvorrichtung (47) angeschlossen ist, deren Eingang an die Abzugsöffnung der ersten Permeationsvorrichtung angeschlossen ist, deren Abzugsöffnung an die erste Leitung (25) angeschlossen ist und deren Permeatausgang an die Förderung des Ansaugverdichters (35) angeschlossen ist.

5. Vorrichtung nach einem der Ansprüche 1 bis 4, dadurch gekennzeichnet, daß sie einen Wärmeaustauscher (51) umfaßt, der zwischen der ersten Leitung (25) an einer der Turbine (27) nachgeschalteten (bzw. vorgeschalteten) Stelle und der dritten Leitung (31) an einer dem Ansaugverdichter (35) vorgeschalteten (bzw. nachgeschalteten) Stelle einen Wärmeaustausch herstellt.

6. Vorrichtung nach einem der Ansprüche 1 bis 4, dadurch gekennzeichnet, daß sie einen Wärmeaustauscher (33) umfaßt, der zwischen der ersten Leitung (25) an einer der Turbine (27) vorgeschalteten Stelle und der dritten Leitung (31) an einer dem Ansaugverdichter (35) vorgeschalteten Stelle einen Wärmeaustausch herstellt.

7. Vorrichtung nach einem der Ansprüche 1 bis 6, dadurch gekennzeichnet, daß sie Mittel zur Kühlung der Permeationsvorrichtung(en) (45; 45, 47) umfaßt.

8. Vorrichtung nach einem der Ansprüche 1 bis 7, dadurch gekennzeichnet, daß die Turbine (27) und der Ansaugverdichter (35) vom Gaslagertyp sind.

9. Vorrichtung nach einem der Ansprüche 1 bis 8, dadurch gekennzeichnet, daß es sich bei dem ersten Gas zumindest im wesentlichen um Stickstoff handelt und daß das zweite Gas Kohlendioxid enthält.

10. Gasgemischhaltiger Laserapparat (1) mit einer Beschickungsvorrichtung nach einem der Ansprüche 1 bis 9.

## Claims

1. Device for feeding a gas-mixture laser apparatus (1), of the type comprising a first line (25) used to convey a first gas to the apparatus, a second line (29) used to convey to the apparatus a second gas intended to be mixed with the first gas, a third line (31) used to recycle the mixture of the two gases leaving the apparatus, and a permeator (45), the inlet of which is connected to the third line the permeate outlet of which is connected to the second line and the discharge outlet of which is connected to the first line, characterized in that an expansion turbine (27) is mounted in the line first (25), in that a suction compressor (35) is mounted in the third line (31), and in that the mechanical energy developed by the turbine is used to drive the suction compressor.

2. Device according to Claim 1, characterized in that the wheel of the turbine (27) and that of the suction compressor (35) are fixed on the same shaft (43).

3. Device according to Claim 1 or 2, characterized in that a second compressor (39), driven by an external energy source (41), is mounted in the third line (31) downstream of the suction compressor (35).

4. Device according to any one of Claims 1 to 3, characterized in that the discharge outlet of the permeator (45) is connected to the first line (25) via a second permeator (47), the inlet of which is connected to the discharge outlet of the first permeator, the discharge outlet of which is connected to the first line (25) and the permeate outlet of which is connected to the delivery of the suction compressor (35).

5. Device according to any one of Claims 1 to 4, characterized in that it comprises a heat exhcanger (51) which thermally connects the first line (25), downstream (respectively upstream) of the turbine (27), and the third line (31), upstream (respectively downstream) of the suction compressor (35).

6. Device according to one of Claims 1 to 4, characterized in that it comprises a heat exchanger (33) which thermally connects the first line (25) upstream of the turbine (27), and the third line (31), downstream of the suction compressor (35).

7. Device according to any one of Claims 1 to 6, characterized in that it comprises means for cooling the permeator or permeators (45; 45, 47).

8. Device according to any one of Claims 1 to 7, characterized in that the turbine (27) and the suction compressor (35) are of the type having gas bearings.

9. Device according to any one of Claims 1 to 8, characterized in that the first gas is at least essentially nitrogen and in that the second gas contains carbon dioxide.

10. Gas-mixture laser apparatus (1) equipped with a feed device according to any one of Claims 1 to 9.
